Europäisches Patentamt

European Patent Office

Office européen des brevets

(19)

(11) Numéro de publication: **0 356 308**
**A1**

## (12) DEMANDE DE BREVET EUROPEEN

(21) Numéro de dépôt: 89402266.4

(22) Date de dépôt: 10.08.89

(51) Int. Cl.⁵: **B 01 J 8/44**

(30) Priorité: 19.08.88 FR 8811026

(43) Date de publication de la demande:
28.02.90 Bulletin 90/09

(84) Etats contractants désignés:
AT BE CH DE ES FR GB GR IT LI LU NL SE

(71) Demandeur: CHARBONNAGES DE FRANCE,
Etablissement public dit:
Tour Albert 1er 65 avenue de Colmar
F-92507 Rueil Malmaison Cédex (FR)

(72) Inventeur: Delebarre, Arnaud
76 boulevard de la Liberté
F-59000 Lille (FR)

Witwicki, Paul, Vladimir Résidence de la Marne
Immeuble Chaumont 42 rue de la Marne
F-62400 Bethune (FR)

(74) Mandataire: Robert, Jean-Pierre et al
CABINET BOETTCHER 23, rue la Boétie
F-75008 Paris (FR)

(54) Dispositif d'alimentation en gaz de fluidisation des ouvertures d'une grille de support d'un lit de particules à fluidiser.

(57) Le dispositif d'alimentation en gaz de fluidisation des ouvertures 1 d'une grille de fluidisation comporte un embout 4 portant chaque entrée inférieure 3 de chaque ouverture 1 dont la longueur e est comprise entre 0 et 0,5 fois le diamètre d de l'embout, et une coupelle 5a dans laquelle plonge l'embout et du fond 6 de laquelle l'embout est distant d'une valeur i qui peut être réglable. Le tout est enfermé dans un caisson 5 d'amenée du gaz de fluidisation.

Fig. 1

EP 0 356 308 A1

**Description**

## Dispositif d'alimentation en gaz de fluidisation des ouvertures d'une grille de support d'un lit de particules à fluidiser.

La présente invention concerne un dispositif d'alimentation en gaz de fluidisation des ouvertures d'une grille de support d'un lit de particules à fluidiser.

On sait que certaines grilles ont des ouvertures de soufflage d'air de fluidisation qui peuvent être bouchées par la retombée des particules solides.

C'est notamment le cas des grilles dans lesquelles les ouvertures sont évasées vers le haut, en forme par exemple de tronc de cône ou de tronc de pyramide. Or, ces ouvertures après chaque arrêt de fluidisation sont obstruées par les particules solides qui retombent sur la grille. Il faut donc, pour remettre en fluidisation les particules, procéder au dégagement de ces ouvertures, opération appelée décolmatage. Cette obstruction au niveau des ouvertures de la grille provient du fait que la tubulure d'alimentation de la grille en gaz de soufflage comporte soit un coude, soit un siphon afin que les particules soient empêchées de pénétrer dans la totalité de la tuyauterie de soufflage lors de l'arrêt de la fluidisation.

Le décolmatage est assuré jusqu'ici par plusieurs dispositifs. L'un d'eux consiste en une alimentation individuelle de chaque ouverture de la grille au moyen d'une canalisation qui comporte une vanne de réglage de débit, une vanne d'arrêt, un diaphragme et un moyen de retenue des particules constitué par un siphon. Lorsqu'il y a accumulation, la vanne d'arrêt est fermée et on chasse les particules accumulées par de l'air comprimé. Ces moyens sont efficaces mais compliqués et onéreux.

On connaît également une solution à ce problème dans laquelle on met en place dans la tubulure de soufflage un élément de retenue des particules (dans un sens) qui laisse passer l'air dans l'autre sens. Cet élément est simple mais introduit une perte de charge importante dans l'installation de fluidisation.

Enfin, on connaît une dernière solution par laquelle le décolmatage est opéré par de l'air comprimé qui aboutit dans la masse colmatée au moyen d'une tubulure de faible diamètre située dans l'orifice de fluidisation. Cette solution efficace implique un double réseau d'alimentation des orifices de fluidisation qui est un facteur de renchérissement du coût.

La présente invention entend apporter une autre solution à ce problème de colmatage des particules dans les orifices de la grille de fluidisation, qui s'affranchit de la complexité des dispositifs antérieurs en permettant d'utiliser le gaz de fluidisation pour parvenir au décolmatage.

A cet effet, l'invention a pour objet un dispositif d'alimentation en gaz de fluidisation d'une grille de support d'un lit de particules à fluidiser, cette grille ayant des ouvertures de soufflage ayant chacune une entrée inférieure en communication avec un caisson d'arrivée de gaz de soufflage et un moyen d'arrêt de la chute des particules interposé entre cette ouverture inférieure et le caisson pour retenir les particules pendant les interruptions de fonctionnement, dans lequel le moyen d'arrêt est constitué par une coupelle disposée en regard et une distance déterminée de l'entrée inférieure de préférence portée par un embout de hauteur au plus égale à la moitié de son diamètre.

Chaque ouverture peut être associée à un caisson individuel et, dans ce cas, la coupelle peut être constituée par le fond et les parois latérales du caisson lui-même. La hauteur du caisson sera alors déterminée par construction pour obtenir la distance déterminée séparant le fond du caisson de l'extrémité libre de l'embout.

Il sera cependant préféré une forme de réalisation dans laquelle plusieurs des embouts prolongeant les ouvertures de la grille plongent dans un caisson unique d'amenée du gaz de fluidisation. Dans ce cas, au droit de chaque embout la coupelle est éventuellement portée par un piston monté à coulissement étanche dans une chemise ménagée dans la paroi inférieure du caisson au droit de l'embout, le piston étant par exemple solidaire d'une vis axiale de réglage de sa position coopérant avec un écrou porté par le caisson et possédant une tête de manoeuvre à son extrémité extérieure au caisson. Cette disposition permet de procéder au réglage de la distance séparant la coupelle de l'embout en fonction de la nature du matériau en particules à fluidiser.

L'invention sera mieux comprise au cours de la description donnée ci-après d'un mode de sa réalisation, qui permettra d'en dégager les avantages et les caractéristiques secondaires.

Il sera fait référence aux dessins annexés dans lesquels :
- la figure 1 est un schéma représentant les caractéristiques de base de l'invention,
- la figure 2 représente partiellement par une vue en coupe une grille de fluidisation équipée du dispositif selon l'invention,
- la figure 3 est une vue de détail de la figure 2 au niveau d'une ouverture de fluidisation.

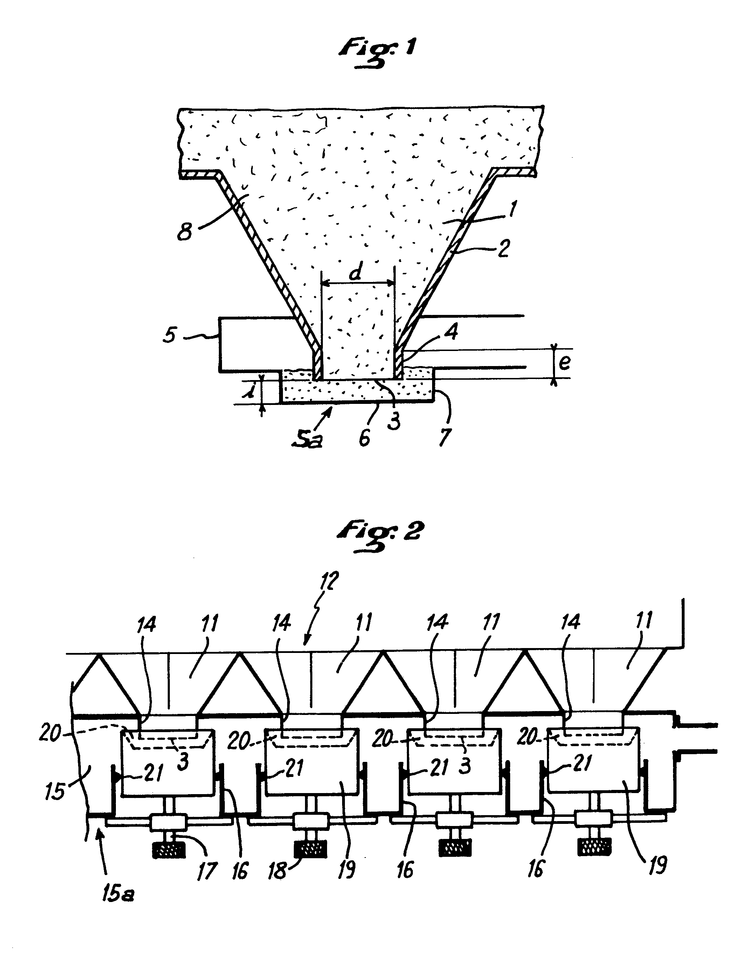

A la figure 2 on a représenté une ouverture 1 de soufflage de gaz de fluidisation ménagée dans une grille 2 de support du matériau en particules à fluidiser. Cette ouverture 1 est ici en tronc de cône inversé (ou tronc de pyramide) qui possède une entrée inférieure 3 pour le gaz de fluidisation. Cette entrée 3 est ici ménagée à l'extrémité d'un embout 4 de hauteur $e$ choisie comme étant au maximum égale à la moitié du diamètre $d$ de l'ouverture 3. Cet embout 4 plonge dans un caisson 5 d'amenée du gaz dont la paroi inférieure 5a est aménagée en forme de coupelle en regard de l'extrémité libre de l'embout 4, c'est-à-dire qu'elle présente une paroi de fond 6 et des parois latérales 7 délimitant un volume dans lequel plonge l'embout 4. On constitue ainsi une sorte de siphon bloquant la chute des particules dans le caisson 5 en cas d'interruption de la fluidisation.

2

On a représenté en 8 le matériau accumulé dans l'ouverture 1 et bloqué par ce siphon.

Si les parois de l'ouverture de soufflage sont coniques ou pyramidales, on peut se dispenser de l'embout, la partie terminale de petit diamètre de ces parois formant embout elle-même. Ces dispositions permettent de décolmater le produit accumulé avec une pression de gaz dans le caisson de l'ordre de celle nécessaire à la fluidisation.

La distance i séparant l'entrée 3 de la paroi de fond 6 de la coupelle 5a influence la répartition du débit et, en fixant sa valeur par expérimentation, permet d'obtenir un bon équilibrage de la fluidisation.

On donnera ci-après à titre d'exemples les résultats d'essais obtenus avec diverses matière en particules, de granulométrie différente.

Pour les pertes de charge que l'on rencontre habituellement dans les grilles de fluidisation, la distance i peut varier de 5 à 20 millimètres avec des entrées ayant un diamètre de l'ordre de 60 à 75 millimètres.

Ainsi, pour un embout (A) de diamètre d de 60 millimètres, de hauteur e 20 millimètres et pour un intervalle i de 15 millimètres on a obtenu les valeurs suivantes de pression nécessaire au décolmatage (en hectopascals).

| Nature du solide | Hauteur de solide en millimètres | | | | | |
|---|---|---|---|---|---|---|
| | 200 | 300 | 400 | 500 | 600 | 700 |
| sable (1) | 80 | 103 | 138 | 164 | 197 | 237 |
| schistes (2) | 118 | 189 | 224 | - | - | - |

(1) La granulométrie du sable est inférieure à 0,5 millimètres (diamètre moyen des particules égal à 0,28mm) et sa densité en vrac de 1,53 (on rappellera que le diamètre moyen des particules est une caractéristique classique des lits fluidisés égale à la moyenne harmonique des diamètres des particules).
(2) Le schiste était d'une granulométrie telle que la plus grande dimension de particules est au plus égale à 1 centimètre (diamètre moyen des particules 0,8mm) avec une densité en vrac de 1,39 en moyenne.

Pour une entrée 3 de diamètre d = 75 millimètres sans embout (B) , l'interstice i étant conservé à 15 millimètres, on obtient le tableau de valeurs suivantes (pression de décolmatage en hectopascals) :

| Nature du solide | Hauteur de solide en millimètres | | | | | |
|---|---|---|---|---|---|---|
| | 200 | 300 | 400 | 500 | 600 | 700 |
| schiste (1) | 158 | 184 | - | - | - | - |
| schiste (2) | 158 | 204 | - | - | - | - |
| schiste (3) | 80 | 105 | 105 | 118 | 125 | 132 |

(1) le schiste possède la même granulométrie que celui du tableau précédent ;
(2) la granulométrie est telle que la plus grande dimension d'une particule est inférieure ou égale à 3,15 millimètres (diamètre moyen 0,482 mm, densité moyenne en vrac 1,46) ;
(3) la granulométrie est telle que la plus grande dimension d'une particule est au plus égale à 1 millimètre (diamètre moyen 0,217 mm, densité moyenne en vrac 1,4).

Après décolmatage, la pression s'établit de la manière suivante (en hectopascals) :

| Nature du solide | Embout | Hauteur de solide en millimètres | | | | | |
|---|---|---|---|---|---|---|---|
| | | 200 | 300 | 400 | 500 | 600 | 700 |
| sable | (A) | 44 | 80 | - | - | - | - |
| schiste (1) | (A) | 37 | 80 | 80 | - | - | - |
| schiste (1) | (B) | 53 | 66 | 80 | 80 | 92 | 42 |
| schiste (2) | (B) | 53 | 90 | 121 | 137 | 150 | 171 |
| schiste (3) | (B) | 80 | 84 | 110 | - | - | - |

Les résultats illustrent le fait que lorsqu'il se produit un décolmatage, la pression qui le provoque est au plus de l'ordre de trois fois la pression de fluidisation.

Sur la figure 2, on a représenté plusieurs ouvertures 11 d'une grille 12, alimentées en gaz de fluidisation par une boîte à vent ou un caisson unique 15. Le fond 15a de ce caisson comporte des cheminées ou chemises tubulaires 16 en face des embouts 14 de chaque ouverture 11. Dans ces chemises peut être réglé en position au moyen d'une vis 17 manoeuvrable par un bouton 18, un piston 19 dont la face supérieure 20 est conformée en coupelle. Chaque piston 19 coulisse de manière étanche dans sa chemise 16 grâce à un joint 21.

**EP 0 356 308 A1**

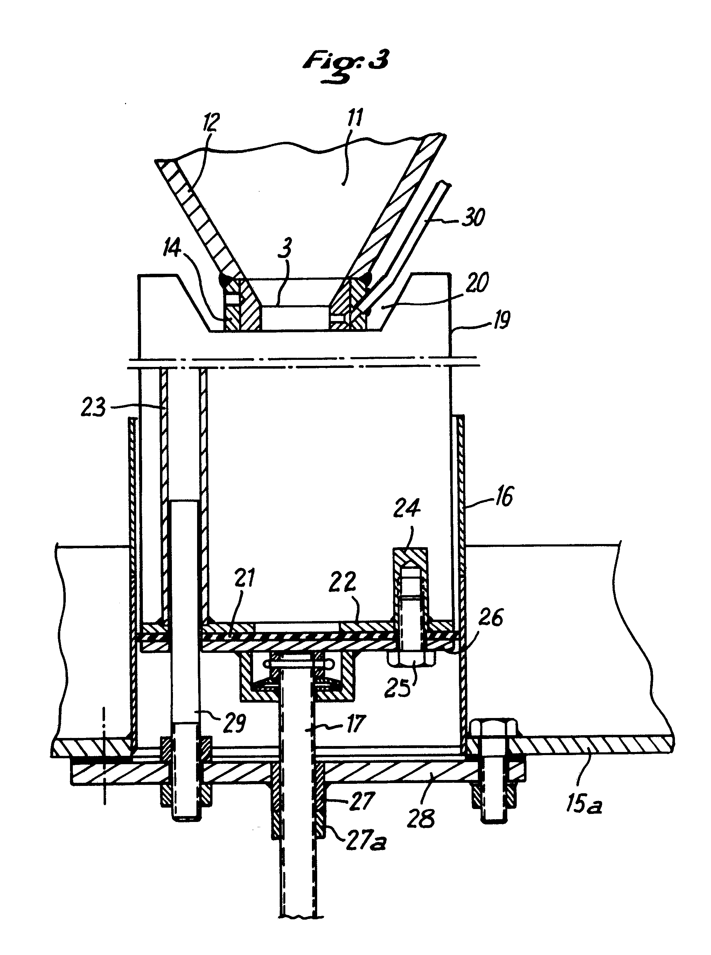

La figure 3 est une vue plus précise de l'un de ces pistons 19 représenté en position haute c'est-à-dire en appui sur l'extrémité de l'embout 14. On retrouve sur cette figure les éléments déjà décrits à la figure 2 avec les mêmes références. Le piston 19 est en forme de cylindre creux fermé à sa partie inférieure par une plaque 22 qui forme support pour des guides tubulaires 23 (au nombre de trois) et pour des embouts taraudés borgnes 24. Ces derniers, au nombre de trois, permettent le vissage de vis de fixation 25 d'une plaque 26 de serrage du joint 21. A cette plaque 26 est fixée la tige filetée 17 qui est engagée dans un écrou fixe 27 solidaire du fond 15a du caisson par un support 28. Un contre-écrou 27a permet de fixer la position réglée. Une colonnette 29 est fixée au support 28 en regard de chacun des guides tubulaires 23. Le piston 19 est ainsi guidé axialement et arrêté en rotation lors de la manoeuvre de la vis 17. Il faut enfin noter la présence d'une buse 30 de prise de pression au niveau de l'embout 14, ou des parois de l'entrée inférieure 3 de l'ouverture de soufflage, si la hauteur e de l'embout est trop faible ou nulle.

On voit que la manoeuvre de la tige 17 permet d'ajuster la distance séparant l'embout 14 du fond de la coupelle 20 et permet d'adapter le régime de fonctionnement de la grille, tant du point de vue de la répartition et de l'équilibrage des débits du gaz de fluidisation que du point de vue du décolmatage, à la nature du produit à fluidiser.

La prise de pression 30 ménagée au niveau de l'embout constitue un moyen simple de vérifier que le décolmatage de chaque ouverture est réalisé. En effet, lorsque l'ouverture est colmatée, la pression qui y règne est supérieure à la pression atmosphérique et approximativement égale à la pression de refoulement du ventilateur. Lorsque le décolmatate est réalisé, on observe au niveau de la paroi interne de l'embout une pression inférieure à la pression atmosphérique.

Comme il est connu en soi, l'obstruction de la prise de pression par les solides sera avantageusement évitée en la munissant d'un filtre, en matière poreuse par exemple, ou en y réalisant une contre-pression d'air.

## Revendications

1. Dispositif d'alimentation en gaz de fluidisation d'une grille (2) du support d'un lit de particules à fluidiser, cette grille ayant des ouvertures de soufflage (1) ayant chacune une entrée inférieure (3) en communication avec un caisson (5) d'arrivée de gaz de soufflage et un moyen d'arrêt de la chute des particules interposé entre cette ouverture (3) inférieure et le caisson pour retenir les particules pendant les interruptions de fonctionnement, caractérisé en ce que le moyen d'arrêt est constitué par une coupelle (5a) disposée en regard et à une distance (i) déterminée de l'entrée inférieure (3) de l'ouverture de soufflage (1).

2. Dispositif selon la revendication 2, caractérisé en ce que l'entrée inférieure (3) de l'ouverture de soufflage est ménagée à l'extrémité d'un embout (4) de prolongation de l'ouverture (1) de hauteur (e) au plus égale à la moitié de son diamètre (d) intérieur.

3. Dispositif selon la revendication 1 ou la revendication 2 caractérisé en ce que la coupelle (5a) est constituée par le fond (6) et des parois latérales (7) du caisson lui-même (5).

4. Dispositif selon la revendication 1 ou la revendication 2, caractérisé en ce que la coupelle (20) est portée par un piston (19) monté à coulissement étanche dans une chemise (16) ménagée dans la paroi inférieure (15a) du caisson (15) au droit de l'embout (14).

5. Dispositif selon la revendication 4, caractérisé en ce que le piston est solidaire d'une vis axiale de réglage (17) de sa position, coopérant avec un écrou porté par le caisson et possédant une tête de manoeuvre (18) à son extrémité extérieure au caisson.

6. Dispositif selon la revendication 4, caractérisé en ce que le guidage axial du piston et son arrêt en rotation sont réalisés par des colonnettes (19) de guidage solidaires de la paroi de fond du caisson (15).

7. Dispositif selon l'une quelconque des revendications 1 à 6, caractérisé en ce que les parois de l'entrée inférieure (3) de l'ouverture de soufflage comportent une prise de pression.

4

EP 0 356 308 A1

Fig. 1

Fig. 2

*Fig. 3*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 329 526 (M.R. BAGLEY et al.) <br> * Résumé; figures 1-5; colonne 1, lignes 12-16; colonne 2, lignes 34-49; colonne 3, lignes 24-33; colonne 3, ligne 52 - colonne 4, ligne 68 * <br> --- | 1,3 | B 01 J 8/44 |
| A | FR-A-2 171 945 (CHARBONNAGES DE FRANCE) <br> * Page 1, lignes 1-5; figure 2 * <br> --- | 1 | |
| A | FR-A-2 084 176 (THANN ET MULHOUSE) <br> * Figures 1-3 * <br> --- | 1 | |
| A | EP-A-0 225 221 (CHARBONNAGES DE FRANCE) <br> * Résumé; colonne 5, ligne 23 - colonne 6, ligne 14; figure 2 * <br> --- | 1 | |
| A | N.T.I.S. TECH NOTES, novembre 1987, page 1073, Springfield, VA, US; "Variable restriction grid plate for fluidized beds" <br> * Résumé * <br> ----- | | DOMAINES TECHNIQUES RECHERCHES (Int. Cl.5) <br><br> B 01 J |

Le présent rapport a été établi pour toutes les revendications

| Lieu de la recherche | Date d'achèvement de la recherche | Examinateur |
|---|---|---|
| LA HAYE | 21-11-1989 | SIEM T.D. |

EPO FORM 1503 03.82 (P0402)